# EUROPÄISCHE PATENTSCHRIFT

(11) **EP 1 218 265 B1**
(45) Veröffentlichungstag und Bekanntmachung des Hinweises auf die Patenterteilung: **03.03.2004**
(21) Anmeldenummer: 00971252.2
(22) Anmeldetag: 21.09.2000
(51) Int. Cl.: B65G 1/02, B65G 1/04

(54) **REGALLAGER**
SHELF STORAGE FACILITY
ENTREPOT A RAYONNAGES

(30) Priorität: 29.09.1999 DE 19946800
(43) Veröffentlichungstag der Anmeldung: 03.07.2002
(73) Patentinhaber: Swisslog (Deutschland) GmbH, 71634 Ludwigsburg (DE)
(72) Erfinder: LANG, Hartmut, 73249 Wernau (DE)
(74) Vertreter: Rösler, Uwe, Dipl.-Phys.
(86) Internationale Anmeldenummer: PCT/DE2000/003284
(87) Internationale Veröffentlichungsnummer: WO 2001/023281

(56) Entgegenhaltungen:
- DE-A- 1 811 635
- DE-A- 4 343 631
- DE-A- 19 741 670

## Beschreibung

Beispielsweise in Apotheken werden Regallager benötigt, die in der Lage sind, auf vergleichsweise engem Raum eine extrem große Vielzahl unterschiedlicher Produkte wiederauffindbar zu lagern. Aus der DE 4343631A ist eine Regaleinrichtung mit einer Vielzahl in Form von Führungsrinnen ausgebildete Regalfächern bekannt. Die zu lagernden Produkte sind zu einem sehr großen Teil in Apotheken überhaupt nur in einem einzigen Exemplar vorhanden und außerdem unterscheiden sich die Abmessungen von Produkt zu Produkt. Es ergibt praktisch kaum unterschiedliche Produkte mit gleichen Abmessungen der sie aufnehmenden Verpackung.

Zum Lagern dieser Produkte ist es bekannt sogenannte Ziehschränke zu verwenden. Diese bestehen aus einer Zarge oder einem Korpus, in dem ein Fachböden aufweisender Zieheinsatz längsverschieblich aufgehängt ist. Solche Ziehschränke können nur in solchen Apotheken verwendet werden, in denen die Offizin ausreichend Platz zum Aufstellen der Ziehschränke bietet. Sobald die Fläche kleiner wird, muss die Lagerung der Produkte anderen Orts geschehen. Damit entsteht das Problem, die Produkte vom Lager in die Offizin zu schaffen. Des weiteren müssen die Produkte aus dem Regallager in das Transportvehikel geschafft werden bzw. neue Produkte in dem Regallager verteilt werden.

Die klassischen Ziehschränke eigenen sich hierzu weniger, denn zufolge der stark unterschiedlichen Verpackungsgrößen sind die Schränke unnötig voluminös. Der größte Teil innerhalb der Schränke ist ungenutzter Raum. Darüber hinaus können die Schränke nicht für eine automatisierte Auslagerung von gewünschten Produkten auf eine Fördereinrichtung herangezogen werden.

Aus der Praxis ist ein automatisiertes Regallager, insbesondere zur Anwendung im Apothekenbereich, bekannt, bei dem an Stelle der Ziehschränke sehr lange ebene Regalböden verwendet werden, auf denen die Produkte abgelegt werden. Die Speicherung in diesem Lager erfolgt chaotisch unter Verwendung eines Lagerverwaltungssystems. In dem Verwaltungssystem wird der Ort des gewünschten Produktes aufbewahrt. Die Koordinaten des Ortes sind die Nummer des betreffenden Fachbodens und der Abstand gemessen in Metern von einem Bezugspunkt, meistens dem Regalbodenanfang. Diese Daten werden an ein Regalbediengerät übermittelt, das entsprechend der Meterangabe an dem Regalfach entlang fährt, um dann mit Hilfe eines Sauggreifers das Produkt auf das Regalbediengerät zu ziehen.

Der praktische Betrieb mit diesem System hat eine Reihe von Schwächen gezeigt. Gelegentlich sind die Verpackungen nicht einwandfrei geschlossen. Beim Versuch, die Verpackung auf das Regalbediengerät zu ziehen, öffnet der Sauggreifer die Lasche. Damit ist eine ordnungsgemäße Bewegung des Produktes nicht mehr gewährleistet.

Wenn der Knickfalz der Lasche oben ist, stellt sich die Verpackung im Spalt zwischen dem Regalbediengerät und dem Fachboden schräg und der Inhalt entleert sich auf den Boden.

Liegt der Knickfalz der Lasche an der Seite, wird beim Ziehen die Verpackung gelegentlich schief gezogen und stößt dann benachbarte Produkte an. Da auch diese nur lose auf dem ebenen Fachboden aufliegen, werden sie aus ihrer Position gedrückt. Bei dem nachfolgenden Versuch die schräggestellte Nachbarpackung zu fassen, sind die Greifer nicht in der Lage, die Verpackung ordnungsgemäß anzusaugen. Dazu darf ihr Schrägwinkel nicht größer als höchstens 5° bis 10° betragen. Andernfalls können die Greifer die Packung nicht fassen.

Wenn bei dem bekannten System eine Störung auftritt, muss das Regalbediengerät in eine Endstellung gebracht werden und das Personal muss sich in den Gang begeben, in dem normalerweise das Regalbediengerät fährt, um dort selbst die Verpackungen nach der Angabe der oben genannten Koordinaten aus dem Regallager entnehmen. Hierbei besteht eine weitere Gefahr zufällig an den abgelagerten Produkten zu streifen und sie dabei aus ihrer Position zu bringen. Jedes aus der Solllage gebrachtes Produkt muss nach dem Wiederanlaufen des automatischen Betriebs erneut in das Regallager eingegeben werden.

Die stark unterschiedlichen Verpackungsgrößen und die stark unterschiedlichen Gewichte, die zwischen wenigen Gramm und fast einem halben Kilogramm variieren bedingen weitere Schwierigkeiten bei den Sauggreifern für die Produkte.

Bei dem bekannten System kann außerdem die räumliche Tiefe des Fachbodens, die zum Ablegen der größten zulässigen Verpackung dimensioniert ist, nicht dazu ausgenutzt werden, mehrere kleine Verpackungen hintereinander zu lagern, weil es praktisch unmöglich ist, auf ein in der zweiten Reihe liegendes Produkt zu zugreifen. Das bekannte System ist im übrigen dafür auch nicht ausgerüstet.

Ausgehend hiervon ist es Aufgabe der Erfindung ein Regallager zu schaffen, dass es gestattet eine Vielzahl von Produkten raumsparen abzulegen, wobei auch stark unterschiedliche Produktgrößen einwandfrei beherrscht werden können.

Diese Aufgabe wird erfindungsgemäß durch das Regallager mit den Merkmalen des Anspruches 1 gelöst.

Bei dem neuen Regallager liegen die einzelnen Produkte nicht mehr unmittelbar auf Regalböden auf, sondern für die Produkte sind Regalfächer vorgesehen, in denen die Produkte auf geeigneten Produktträgern lagern. Die Produktträger sind mit Führungsmitteln ausgestattet, durch die sie einwandfrei und lagerichtig in dem jeweiligen Regalfach gehalten werden können.

Das Regalbediengerät wird dadurch in die Lage versetzt, aus dem Regalfach den Produktträger mit dem Produkt oder den Produkten zu entnehmen, wodurch Sauggreifer, die in das Regal greifen und dort zu Problemen führen können entbehrlich sind.

Selbst wenn bei dem neuen Regallager, dass sich für eine Automatisierung eignet, Störungen auftreten sollten und eine Handentnahme notwendig wird, besteht keine Gefahr, die eingelagerten Produkte oder Produktträger durch Vorbeistreifen aus ihrer Position zu bringen. Sie werden durch die miteinander zusammenwirkenden Führungsmittel an dem Regalfach und dem Produktträger einwandfrei festgehalten.

Ein weiterer Vorteil der Verwendung von Produktträgern besteht in der Ausnutzung der räumlichen Tiefe des jeweiligen Regalfaches, denn es ist ohne weiteres möglich, auf dem Produktträger hintereinander mehrere Produkte gleicher oder unterschiedlicher Größe abzulegen und sodann unter Zuhilfenahme des Regalbediengerätes zu separieren. Die Entnahme einzelner Produkte von dem Produktträger gestattet es, die verbleibenden Produkte auf demselben Produktträger wieder in dasselbe Regalfach zurück zu transportieren, womit es ohne weiteres möglich ist die räumliche Tiefe weitgehend auszunutzen. Es ist auf diese Weise eine sehr viel kompakter Lagerung verglichen mit dem Stand der Technik möglich.

Der Aufbau wird einfach, wenn die Regalfächer in Gruppen angeordnet sind und die Fachböden einer Gruppe mit einander verbunden sind. Hierbei läßt sich eine weitere Vereinfachung erreichen, wenn die Fachböden einstückig in einander über gehen.

Die Raumausnutzung in dem Regallager wird gut, wenn die Regalfächer jeweils nur gruppenweise unterschiedliche Größen aufweisen. Erfahrungsgemäß werden bei dem neuen Regallager vorzugsweise zwei, höchstens drei, unterschiedliche Regalfachgrößen benötig, um mit möglichst wenig totem Raum alle auftretenden Produktgrößen einlagern zu können.

Die Ausgestaltung der Regalfächer wird besonders einfach, wenn sie seitlich keine Begrenzungswände aufweisen d.h. jedes Regalfach zur Seite hin offen in das jeweils nächste benachbarte Regalfach übergeht.

Ein sehr einfaches Führungsmittel für den Produktträger wird erhalten, wenn das Führungsmittel durch die Geometrie des jeweiligen Fachbodens gebildet ist. Beispielsweise kann der Fachboden je Regalfach einen in Längsrichtung des Regalfaches sich erstreckende und nach oben offene Führungsrinne enthalten. Die Unterseite des Produktträgers ist entsprechend angepasst, womit eine Bewegung des Produktträgers nur noch in Richtung parallel zur Längserstreckung der Rinne möglich ist. Die Rinne sorgt wegen der schräg verlaufenden Wände für eine automatische Zentrierung in Querrichtung. Positionierfehler können sich im Laufe der Zeit nicht akkumulieren. Selbst nicht exakt eingeführte Produktträger werden durch die Führungsmittel in die Ideallage gezwungen.

Eine sehr einfache Rinne wird erhalten, wenn der Fachboden zwei V-förmig verlaufende ebene Flächen aufweist bzw. der Fachboden nur von diesen Flächen gebildet ist. Die V-förmig angeordneten Flächen verhindern ein Kippen des Produktträgers auf dem Fachboden und sorgen, ohne dass Anpassungen erforderlich sind, automatisch für eine gute Zentrierung.

Auch bei Fachböden mit V-förmiger Rinne, die ansonsten keine horizontal verlaufenden Flächenabschnitte aufweisen, können die Fachböden einstückig ineinander übergehen, wodurch eine gewellte Platte entsteht mit Tälern und Scheiteln. Die Scheitel sind die gedachten Grenzen zu benachbarten Regalfächern.

Wenn die Regalfächer bzw. Fachböden zu Gruppen zusammengefasst sind und jeweils eine Gruppe an einem Tragbalken befestigt ist, läßt sich der Abstand der Fachböden von einander sehr leicht variieren und an die Bedarfsverhältnisse anpassen.

Die Beseitigung von Störungen und das Ein- und Auslagern von Hand wird vereinfacht, wenn mehrere Gruppen von Regalfächern in einem Ziehgestell untergebracht sind, das längsverschieblich in einem Lagergestell angeordnet ist, ähnlich wie bei einem Ziehschrank. Im Falle einer Störung kann das betreffende gestörte Ziehregal herausgezogen werden und ist von allen Seiten bequem zugänglich, wie dies von Ziehschränken bekannt ist.

Der Gang zwischen einander gegenüberstehenden Regalgestellen braucht nur so groß zu sein, wie es für die Bewegung des Regalbediengerätes erforderlich ist. Auf die menschlichen Körperabmessung braucht bei dieser Lösung keine Rücksicht genommen zu werden.

Um auch ein Verrutschen der Produkte auf den Produktträgern zu vermeiden, sind diese auf ihrer Oberseite mit entsprechenden Führungsmitteln versehen. Diese Führungsmittel können dieselbe Gestalt haben, wie die Führungsmittel in den Fachböden d.h. sie können von vorzugsweise V-förmigen Rinne gebildet sein.

Wenn sowohl das Führungsmittel im Fachboden als auch das Führungsmittel an der Obersseite des Produktträgers jeweils eine V-förmige Rinne ist, vereinfacht sich der Produktträger zu einer Winkelschiene, die in dem jeweiligen Regalfach liegt und auf der die Produkte ruhen. Es versteht sich, dass die Orientierung der Rinne so gestaltet ist, dass ihre Seitenwände gegenüber der Horizontalen jeweils einen Winkel von 45° einschließen.

Die Länge aller Produktträger des Regallagers ist gleich. Sie ist vorzugsweise so bemessen, dass zwei, zweckmäßiger drei, mittelgroße Produkte hintereinander darauf Platz finden. Die Abmessung des mittelgroßen Produktes wird aus dem Mittelwert der Abmessungen aller Produkte näherungsweise berechnet. Dabei kann zur Vereinfachung so vorgegangen werden, dass Produkte mit gleichen Abmessungen lediglich einmal bei der Berechnung des Mittelwertes berücksichtig werden. D.h. ihre Häufigkeit wird nicht berücksichtigt.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:
Fig. 1 das erfindungsgemäße Regallager in einer schematisierten, perspektivischen Darstellung, wobei ein Ziehgestell teilweise ausgezogen ist,
Fig. 2 einen der Produktträger des Regallagers nach Fig. 1,
Fig. 3 das Regalbediengerät des Regallagers nach Fig. 1 in einer perspektivischen, vergrößerten Darstellung,
Fig. 4 das Regalbediengerät nach Fig. 3 in einer Ansicht von den Regalfächern her,
Fig. 5 den Betätigungsfinger des Regalbediengerätes nach Fig. 3 in einer vergrößerten, perspektivischen Darstellung, und
Fig. 6 bis 11 den Vorgang des Ein- und Auslagerns an Hand von stark schematisierten Ausschnittsdarstellungen, wobei alle für das Verständnis des Entnahmevorgangs nicht wesentlichen Teile weggelassen sind.

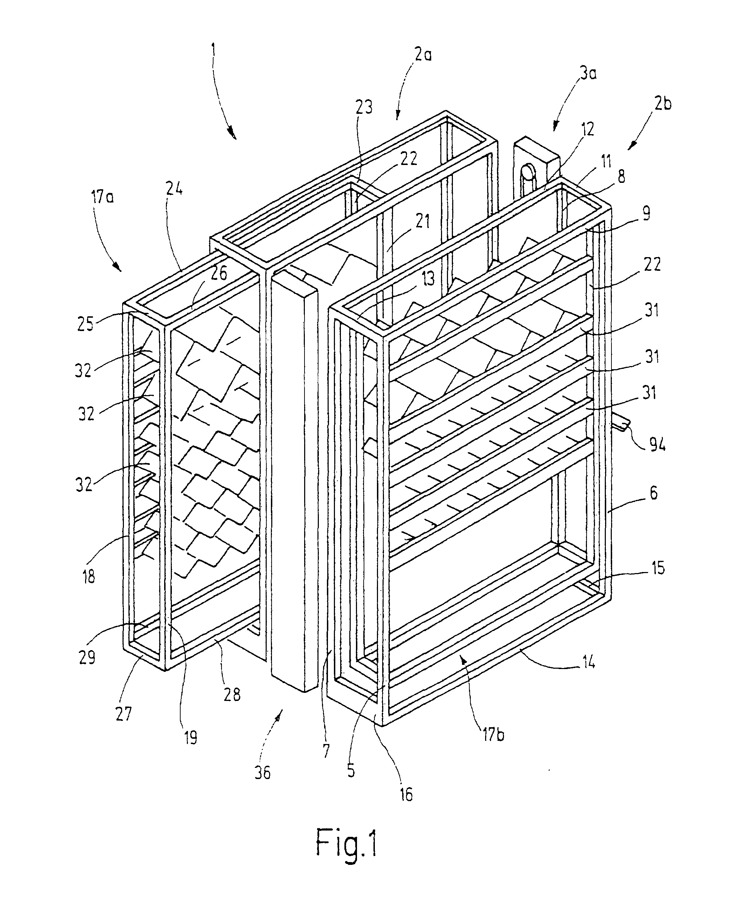

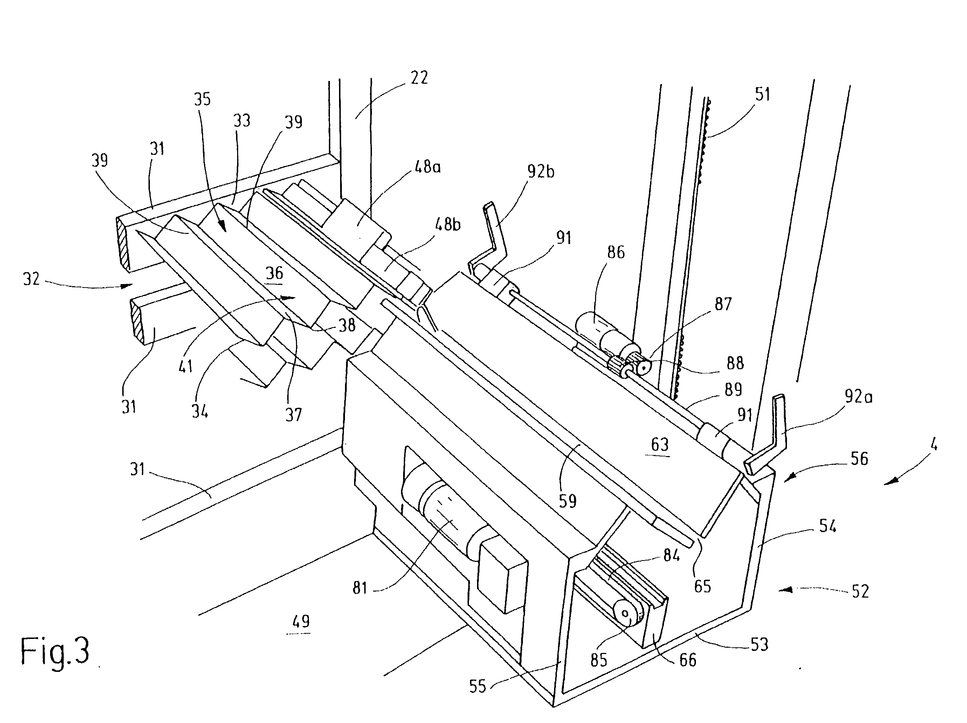

In der Fig. 1 ist perspektivisch und schematisiert ein Regallager 1 veranschaulicht. Zu dem Regallager 1 gehören zwei einander gegenüberstehende Regalgestelle 2a und 2b, die sich mit ihrer Breitseite im Abstand gegenüberstehen, wobei in dem Zwischenraum zwischen den beiden Regalgestellen 2a und 2b zwei vertikale Pfeiler 3a und 3b aufragen, an denen ein Regalbediengerät 4 (Fig. 3) vertikal geführt ist.

Jedes der beiden Regalgestelle 2 hat eine quaderförmige Außengestalt, wobei von dem Quader lediglich dessen Kanten existieren.

Das Regalgestell 2b setzt sich aus vier vertikal aufragenden Pfeilern 5, 6, 7 und 8 zusammen, die an ihren Enden durch jeweils vier Quersereben 9, 11, 12 und 13 oben und entsprechende Querstreben unten verbunden sind, von denen lediglich die Querstreben 14, 15 und 16 erkennbar sind. Die Pfeiler 5...8 und die Querstreben 9...16 sind jeweils an den Ecken mit einander verschraubt oder verschweißt.

Das Regalgestell 2a ist in der gleichen Weise mit denselben Abmessungen aufgebaut, weshalb sich eine erneute Erläuterung erübrigt; die Bezugszeichen des Regalgestells 2b gelten in der gleichen Weise für die spiegelbildlichen Konstruktionselemente des Regalgestells 17b gelten.

In jedem der beiden Tragegestelle 2a und 2b sind zwei Ziehgestelle 17a und 17b längsverschieblich untergebracht. Sie sind beispielsweise mittels nicht gezeigter aber an sich bekannter Kugelführungen in dem Regalgestell 2 an dessen oberen Ende aufgehängt, wozu diese Führungen zweckmäßiger Weise im Bereich der oberen Querstreben 9 und 12 angebracht sind. Auf diese Weise sind die Ziehgestelle 17, wie am Beispiel des Ziehgestells 17a in Fig. 1 zu erkennen ist, zu der dem Betrachter zugekehrten Schmalseite der beiden Regalgestelle 2 herausziehbar. Ein Herausziehen in der entgegengesetzten Richtung ist gesperrt, damit die beiden Ziehgestelle 17 im eingeschobenen Zustand eine definierte Endelage in dem betreffenden Regalgestell 2 aufweisen.

Der Abstand zwischen den Pfeilern 5 und 7 ist groß genug, damit ein Herausziehen des schmäleren Ziehgestells 17 möglich ist.

Ähnlich wie das Regalgestell 2 ist das Ziehgestell 17a ein quaderförmiges Gebilde, von dem lediglich die Kanten in Gestalt von vertikal verlaufenden Streben 18, 19, 21, 22 und an den jeweiligen Enden angeordnete Querstreben 23...29 bestehen. Wegen der Darstellung ist die hintere, untere Querstrebe des Ziehgestells 17a verdeckt.

Das Ziehgestell 17b ist in der identischen Weise ausgeführt, wie das Ziehgestell 17a weshalb sich eine erneute Beschreibung erübrigt und die Bezugszeichen des Ziehgestells 17a in der gleichen Weise für die spiegelbildlichen Konstruktionselemente des Ziehgestells 17b gelten.

Wie Fig. 1 weiter zu entnehmen ist, bilden sowohl das Regalgestell 2 als auch das Ziehgestell 17 jeweils relativ große Flachseiten, die in jeder Betriebsstellung zu einander parallel ausgerichtet sind. Diese Flachseite ist beispielsweise bei dem Regalgestell 2 von den Pfeilern 7 und 8 der oberen Querstrebe 12 sowie der unteren dazu verlaufenden nicht sichtbaren Querstrebe umgrenzt werden. Bei dem Ziehgestell 17 sind dies die vertikalen Streben 19, 21 und die Querstreben 26 und 28. Diese Flachseiten, sowohl des Regalgestells 2 als auch des Ziehgestells 17, werden als Vorderseiten bezeichnet, während die dazu parallelen Flächen als Rückseiten anzusehen sind. Mit den beiden Vorderseiten stehen sich die Regalgestelle 2 einander gegenüber, so dass auch die Vorderseiten der Ziehgestelle 17 mit Abstand gegenüber angeordnet sind.

Zwischen den vertikalen Streben 18 und 22 jedes Ziehgestells 17 erstrecken sich horizontal und damit parallel zu den Querstreben 24 und 26 mehrere Querbalken 31, die mit dem vertikalen Streben 18 und 22 verstellbar verbunden sind. Verstellbar sind sie in dem Sinne, dass sie in beliebeigen Höhen an den beiden vertikalen Streben 18 und 19 befestigt werden können, wobei sie jedoch immer in horizontaler Ausrichtung angeordnet sind.

Jeder der Querbalken 31 trägt eine zugehörige Regalbodenplatte 32, wie dies am Besten die Ausschnittsdarstellung aus Fig. 3 erkennen läßt. Die Regalbodenplatte 32 ist ein rechteckiges Blechform- und -stanzteil mit einer Hinteroder Rückkante 33 und einer dazu parallelen Vorderkante 34. Mit der Hinterkante 33 ist die Regalbodenplatte 32 an dem betreffenden Querbalken 31 angeschweißt. Von da ausgehen kragt sie frei in Richtung zu der Vorderseite des betreffenden Ziehregals 17 aus.

Jede der Regalbodenplatten 32 hat dieselbe räumliche Tiefe gemessen senkrecht zu der Vorderseite des betreffenden Ziehregals 17 und ist so gestaltet, dass sie eine Vielzahl von parallel nebeneinander verlaufenden Rinnen 35 mit V-förmiger Gestalt und 90° Öffnungswinkel bildet. Die V-förmigen Rinnen 35 laufen von der Hinterkante 33 zu der Vorderkante 34. Sie sind sämtlichst zueinander parallel und haben bei einer jeweiligen Regalbodenplatte 32 exakt dieselben Dimensionen. Sie können sich jedoch von Regalbodenplatte 32 zur nächsten Regalbodenplatte 32 in den Abmessungen ändern, wie dies in Fig. 1 im Bereich der oberen dort erkennbaren Regalbodenplatten zu sehen ist.

Jede der V-förmigen Rinnen 35 wird von zwei ebenen Flächen 36 und 37 begrenzt, die im Bereich eines unteren Scheitels 38 einstückig in einander übergehen und im Bereich von oberen Scheiteln 39 in die Wände 36 und 37 der jeweils seitlich benachbarten Rinne 35. Die Scheitel 38 und 39 sind gerade und stehen auf dem betreffenden Querbalken 31 senkrecht.

Wie sich aus der weiter unten angeben Funktionsbeschreibung noch genauer ergeben wird, stellt jede Rinne 35 ein Regalfach dar und die Wände 36 und 37 einen Fachboden 41 des betreffenden Regalfachs.

Die einzelnen Regalfächer 35 gehen in horizontaler Richtung ohne seitliche Trennwände ineinander über. In vertikaler Richtung sind sie durch die jeweils nächste Regalbodenplatte 32 von einander getrennt.

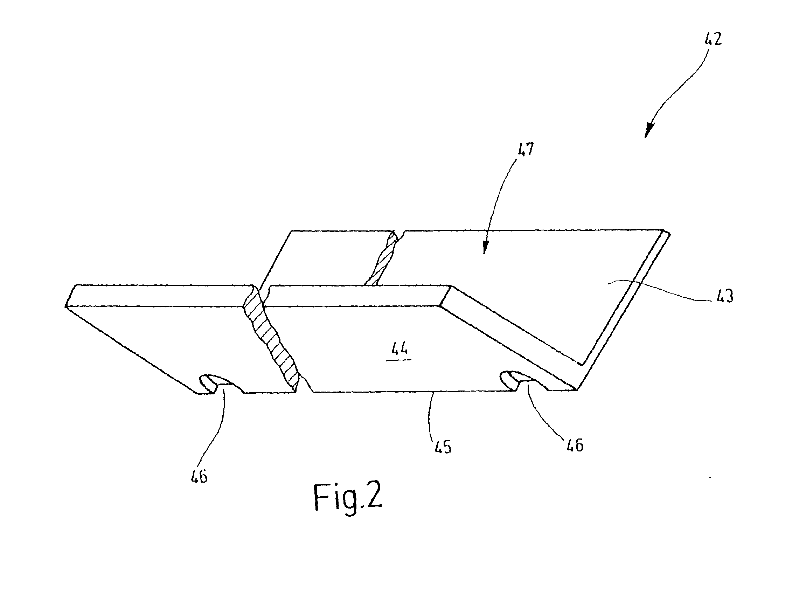

In jedem Regalfach 35 liegt ein Produktträger 42, der in Fig. 2 vergrößert, perspektivisch und in verkürzter Form wiedergegeben ist. Der Produktträger 42 ist ein Kunststoffformteil aus zwei ebnen geraden Wänden 43, 44, die sich über die Länge des Produktträgers 42 erstrecken und konstante Dicke haben. Die beiden Wände 43 und 44 schließen miteinander einen Winkel von 90° ein und sind längs einer Kante 45 einstückig mit einander verbunden. Die Länge der Produktträger 42 ist etwas größer bemessen, als es die Tiefe der Regalbodenplatte 32 gemessen zwischen der Hinterkante 33 und der Vorderkante 34 entspricht.

Die Wand 44 hat eine größere Dicke als die Wand 43 und ermöglicht die Ausbildung von zwei Ausnehmungen 46, die sich in der Nähe der unmittelbar benachbarten Stirnkante des Produktträgers 42 befinden. Die Lage der Ausnehmung 46 und die Länge des Produktträgers 42 ist derart bemessen, dass, wenn der Produktträger 42 an dem Querbalken 31 anstößt, er mit der einen Ausnehmung 46 über die frei auskragende Vorderkante 34 der Regalbodenplatte 32 übersteht, d.h. aus dem betreffenden Regalfach 35 herausragt.

Die Höhe der Wände 43 und 44 der Produktträger 42 ist so bemessen, dass, wenn sie in dem konstruktiv zugehörigen Regalfach 35 liegen, gegenüber den beiden seitliche benachbarten oberen Kämmen 39 geringfügig zurückspringen.

Wie ohne weiteres einleuchtet, sind die Produktträger 42 in den Regalfächern 35 in deren Längsrichtung zwangsläufig geführt und können auch seitlich nicht kippen. Die Führung ergibt sich auf Grund der Geometrie des Fachbodens 41 und der Geometrie des Produktträgers 42. Die im Winkel von 90° zu einander Verlaufenden Wände 36 und 37, die den Fachboden 41 darstellen, bilden gleichzeitig die Führungsmittel für den Produktträger 42, dessen Unterseite, gebildet durch die nach unten weisenden Flächen der Wände 43 und 44, an diese Geometrie angepasst ist.

Die Unterseiten der Wände 43 und 44 stellen somit die zu den Führungsmitteln der Regalfächer 35 komplementären Führungsmittel dar. Da ferner die Wände 43 und 44 planparallele Platten sind, bei der jede für sich mit Ausnahme der Ausnehmung 46 an jeder Stelle die selbe Stärke aufweist, bildet der Produktträger 42 an seiner Oberseite eine ebenfalls V-förmige Rinne 47, die im Gebrauch die einzulagernden Produkte 48 beispielsweise Medikamentenpackungen aufnehmen. In Fig. 3 ist einer der Produktträger 42 veranschaulicht, wie er zwei Produkte 48a und 48b trägt.

Da Medikamentenverpackungen meistens quaderförmige Gestalt haben, können sie wie gezeigt schräg liegend in den Produktträger 42 aufbewahrt werden, wobei sie mit einer Seite auf der Oberseite einer der beiden Wände 43 und 44 aufliegen. Beim Einlagern der Produkte 48 wird darauf geachtet, dass sämtliche Produkte 48 in derselben Weise gekippt in sämtlichen Produktträgern 42 liegen. Dadurch wird verhindert, dass Produkte 48, die nach oben über den benachbarten oberen Scheitel 39 überstehen, mit anderen Produkten 48 in einem benachbarten Regalfach 35 kollidieren, die ebenfalls über den oberen Scheitel 39 überstehen.

Wegen der V-förmigen Oberseite des Produktrrägers 42 können die einmal in dieser Weise eingelagerten Produkte 48 ihre Lage im Produktträger 42 nicht verändern. Darüber hinaus sind sie mit ihren Längsrichtungen parallel zu dem Regalfach 35 ausgerichtet, weil sie durch die V-förmige Rinne 47 des Produktträgers 42 so fest gehalten sind, dass die in der Rinne 47 liegende Kante in der Rinne 47 fixiert wird.

Es bedarf keiner besonderen Darstellung, um zu erkennen, dass in den V-förmigen Rinnen 47 der Produktträger 42 auch unverpackte zylindrische Gegenstände wie Fläschchen und Ampullen aufgenommen werden können, ohne Gefahr, dass sie ihre Orientierung ändern oder von dem Produktträger 42 herunter rollen können.

Bei der Verwendung des gezeigten Regallagers 1 wird darauf geachtet, dass die Produkte 48 höchstens um 1/3 über die von der Kante 45 abliegenden Kante der betreffenden Wand 43 oder 44 nach oben überstehen, wenn sie wie in Fig. 3 gezeigt in dem Produktträger 42 liegen.

Zum Handhaben der Produktträger 42 und der Produkte 48 ist das Regalbediengerät 4 vorgesehen. Das Regalbediengerät 4 verläuft horizontal auf einer Traverse 49, die in vertikaler Richtung zwischen den beiden Pfeilern 3a und 3b verschieblich geführt ist. Beispielsweise mit Hilfe von Zahnriemen 51 und nichn läßt sich die Traverse 49 vertikal verstellen, während das Regalbediengerät 4 auf der Traverse 49 durch ebenfalls nicht dargestellt Antriebsysteme horizontal verfahrbar ist. Derartige Antriebssysteme sind bekannt und brauchen nicht im einzelnen dargestellt zu werden, da sie für das Verständnis der Erfindung nicht wesentlich sind.

Aufgrund dieser Form der Lagerung des Regalbediengerätes 4 kann es bezüglich zweier zueinander rechtwinkeliger Koordinaten verstellt werden und es läuft vor den frei auskragenden Vorderkanten 34 der Regalbodenplatten 32 der beiden Ziehgestelle 17a und 17b in einer vertikalen Ebene.

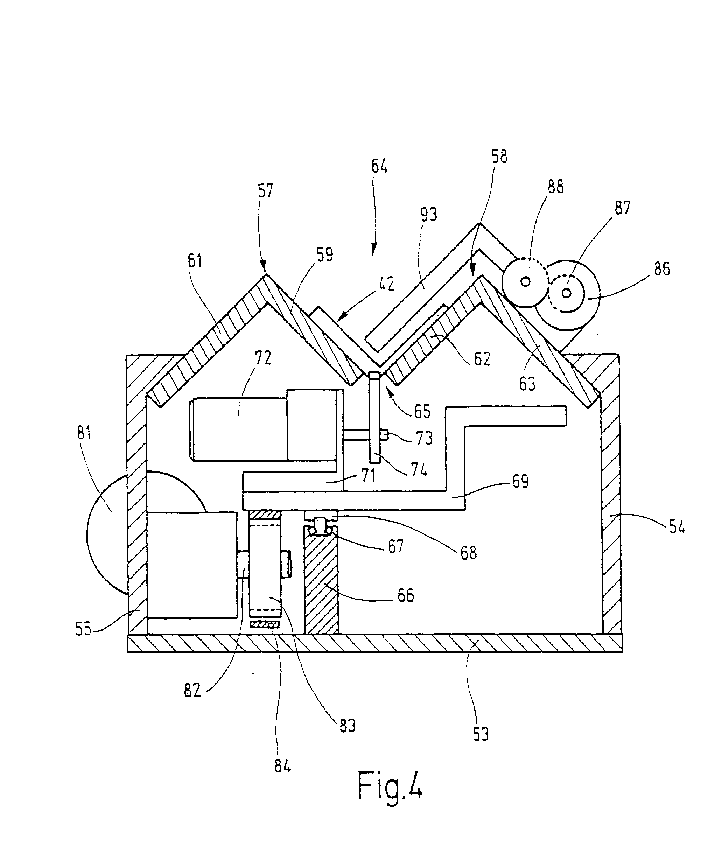

Gemäß den Fig. 3 und 4 gehört zu dem Regalbediengerät 4 ein im wesentlichen rohrförmiges Gehäuse 52 mit einem Boden 53, zwei Seitenwänden 54 und 55 sowie einer Oberseite 56. Die Seitenwände 54 und 55 verlaufen parallel zu einander und rechtwinkelig zu dem Boden 53. Sowohl der Boden 53 als auch die beiden Seitenwände 53 und 54 sind im wesentlichen glatt, während die Oberseite 56 strukturiert ist. Zu den beiden Enden hin ist das rohrförmige Gehäuse 52 offen, wobei jedes in Längsrichtung des Regalbediengerätes 4 liegende Ende des Regalbediengerätes 4 der Vorderseite eines benachbarten Ziehgestells 17a oder 17b gegenüber steht.

Die Oberseite des Regalbediengerätes 4 besteht, wie am Besten Fig. 4 erkennen läßt, aus zwei in Längsrichtung verlaufenden Winkelschienen 57 und 58. Die Winkelschiene 57 setzt sich aus zwei im rechten Winkel zu einander ausgerichteten Schenkeln 59 und 61 zusammen und die Winkelschiene 58 aus zwei im rechten Winkel zu einander verlaufenden Schenkeln 62 und 63. Die Schenkel 61 und 63 sind unter 45° an der Innenseite der beiden Seitenwände 54 und 55 befestigt. Zwischen den Schenkeln 59 und 62 entsteht wiederum eine V-förmige Rinne 64, die von zwei glatten Seitenwänden nämlich den Schenkeln 59 und 62 begrenzt ist. Die Rinne 64 erstreckt sich gerade zwischen den beiden Enden des Regalbediengerätes und ist an jeder Stirnseite offen.

Die Schenkel 59 und 62 stoßen an ihren freien Kanten nicht an einander. Die Rinne 64 ist an ihrer tiefesten Stelle mit einem durchgehenden Spalt 65 versehen, durch den die Rinne 64 nach unten offen ist. In diese Rinne 64 kann wie Fig. 4 zeigt ein Produktträger 42 eingelegt werden und zwar so, dass dessen untere Kante 45 mit den Ausnehmungen 46 durch den Spalt 45 hindurch zugänglich ist.

In dem Gehäuse 42 verläuft eine Führungsschiene 66, die auf der Oberseite des Bodens 53 befestigt ist. Die Führungsschiene 66, die über die Länge des Gehäuses 42 durch läuft, trägt auf ihrer Oberseite eine hinterschnittene Führungsnut 67, in der mit nicht weiter erkennbaren Wälzkörpern ein Schlitten 68 geführt ist. Der Schlitten 68 trägt auf seiner Oberseite eine Konsole 69. Die Konsole 69 kragt auf beiden Seiten über den Schlitten 68 über, wobei bezogen auf Fig. 4 auf der linken Seite ein Montagewinkel 71 auf der Konsole 69 befestigt ist. Der Montagewinkel 71 dient der Halterung eines Getriebemotors 72, dessen Getriebeausgangswelle 73 unterhalb des Spaltes 65 verläuft und rechtwinkelig zu dessen Längserstreckung ausgerichtet ist.

Die Konsole 69 kragt ferner nach rechts über den Schlitten 68 über, um ein Kompensationsgewicht für den Getriebemotor 72 zu haltern bzw. zu bilden. Das Ausgleichsgewicht ist nicht gezeigt.

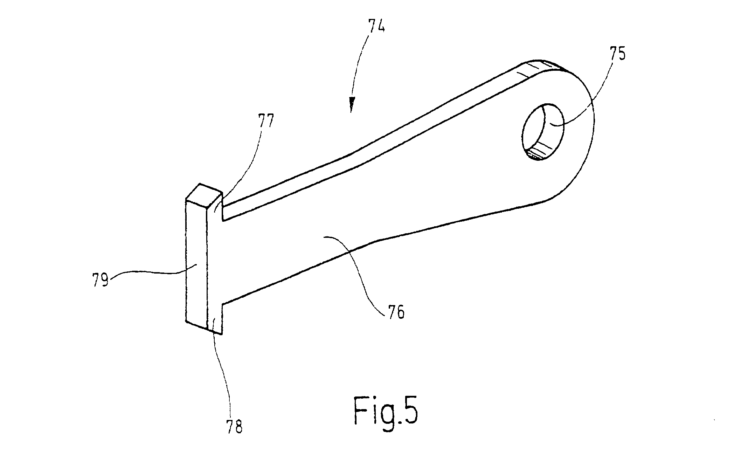

Der Getriebemotor 72 ist ein Servomotor, dessen Ausgangswelle 73 in definierte Winkellagen gesteuert werden kann. Auf der Ausgangswelle 73 sitzt drehfest ein Betätigungsfinger wie ihn Fig. 5 in vergrößerter Darstellung zeigt. Der Betätigungsfinger 74 ist an einem Ende mit einer Aufnahmebohrung 75 zum Durchstecken der Ausgangswelle 73 versehen. Die Mittel zum drehfesten Sichern auf der Ausgangswelle 73 sind nicht gezeigt, da sie für das Verständnis der Erfindung unwesentlich sind.

Ausgehend von der Aufnahmebohrung 75 bildet der Betätigungsfinger 74 einen Arm 76, an dessen freien Ende zwei Haken 77 und 78 ausgebildet sind. Die beiden Haken 77 und 78 erstrecken sich zu entgegengesetzten Richtungen gemessen in einer Ebene, auf der die Achse der Bohrung 75 senkrecht steht. Zwischen den beiden Haken 77 und 78 verläuft eine plane Stirnfläche 79. Mit Hilfe der Haken 77 und 78 wird, wie später noch im einzelnen dargelegt wird, der Produktträger 42 bewegt bzw. in der Rinne 64 abgelegte Produkte 48.

Um die Konsole 69 längs der Führungsschiene 66 in definierte Stellungen zu bewegen, ist ein weiter Getriebemotor 81 vorhanden, der ebenfalls als Servomotor ausgeführt ist. Seine Ausgangswelle 82 liegt parallel zu der Ausgangswelle 73 und damit rechtwinkelig zu der Längserstreckung der Führungsschiene 66.

Die Ausgangswelle 82 trägt drehfest eine Zahnriemenscheibe 83, die den Antrieb eines endlosen Zahnriemens 84 dient, dessen Arbeitstrum zwischen der Zahnriemenscheibe 83 und der Unterseite der Konsole 69 zu erkennen ist. Der endlose Zahnriemen 84 läuft über zwei Umlenkscheiben 85 in Gestalt von Losrollen um, die in der Nähe der Enden der Führungsschiene 66 an dieser frei drehbar gelagert sind. Spannmittel zum Spannen des Zahnriemens 84 sind ebenfalls vorhanden, in der Zeichnung jedoch nicht dargestellt bzw. in Fig. 3 nicht erkennbar, weil durch die Seitenwand 45 abgedeckt.

Ein einer Stelle ist der Zahnriemen 84 mit der Unterseite der Konsole 69 fest verbunden. Wenn der Servomotor 81 in Gang gesetzt wird, wird über die Zahnriemenscheibe 83 und den Zahnriemen 84 die Konsole 69 und damit auch der Betätigungsfinger 74 in Längsrichtung des Spaltes 65 bewegt.

Zum Normieren der beiden Servomotoren 72 und 81 sind bekannter Weise Referenzeinrichtungen vorgesehen, die mit der zentralen Steuerung in bekannter Weise verknüpft sind. Auf diese Weise kennt die zentrale Steuerung sowohl die exakte Winkelstellung des Betätigungsfingers 74 als auch die Stellung der Ausgangswelle 73 bezogen auf die Längserstreckung des Spaltes 65.

An der Außenseite des Schenkels 63 sitzt ein weiterer Getriebemotor 86, der über Stirnzahnräder 87 und 88 eine Welle 89 antreibt, die auf der Außenseite des Schenkels 63 in Lagerböcken 91 drehbar gelagert ist. Mit der Welle 89 sind drehfest zwei L-förmige Hebel 92a und 92b verbunden, deren Schenkel 93a bzw. 93b als Haltefinger wirken. Der Haltefinger 93 kann, wie in Fig. 3 gezeigt, nach oben gerichtet oder gemäß Fig. 4 in die von dem Produktträger 42 gebildete Rinne 67 eingeschwenkt werden, wobei er in dieser Stellung genügend Spiel gegenüber den beiden Wänden 43 und 44 einhält.

Die Haltefinger 93 befinden sich unmittelbar neben den Enden der Rinne 64, um die Rinne 64 wahlweise an ihren beiden Enden absperren zu können. Der Abstand zwischen den Haltefingern 19 ist etwas größer als die Länge des Produktträgers 42.

Da auch der Betätigungsfinger 74 mit Hilfe der Führungsschiene 66 zu beiden Enden des Spaltes hin bewegt werden kann, ist aus der Sicht der Funktion eine symmetrische Betriebsweise möglich, d.h. das Regalbediengerät 4 kann in derselben Weise die Regalfächer 35 des Ziehgestells 17a bedienen wie die Regalfächer 35 in dem Ziehgestell 17b und zwar in jeder Höhe.

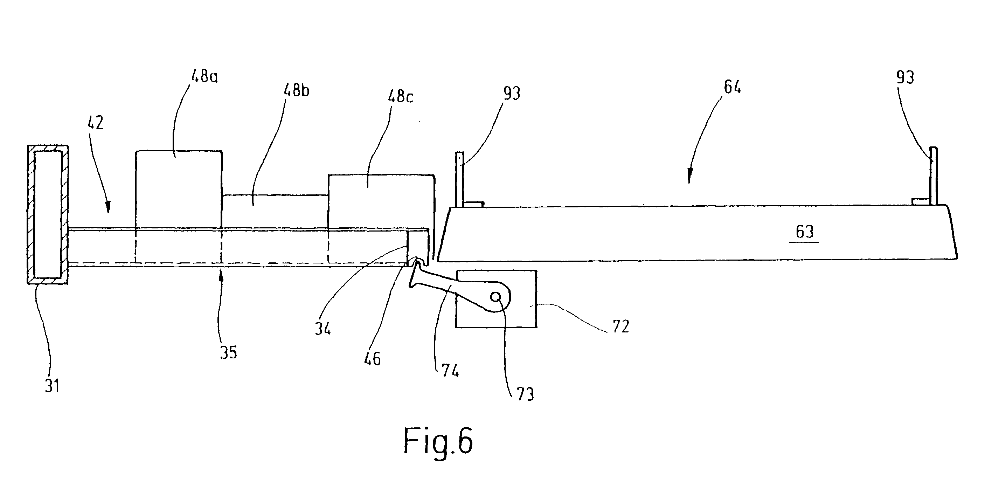

Die genaue Betriebsweise des neuen Regallagers wird nachstehend an Hand der Fig. 6 bis 11 erläutert. In den Fig. 6 bis 11 sind lediglich diejenigen Bauteile schematisch veranschaulicht, die für das Verständnis der Arbeitsweise von Bedeutung sind.

So zeigen die Fig. 6 bis 11 exemplarisch eine der Rinnen bzw. Regalfächer 35, das an dem Querbalken 31 befestigt ist. Von der Rinne 35 ist beispielsweise die Wand 37 zu erkennen. In der Rinne 35 bzw. dem Regalfach 35 liegt ein Produktträger 42, wobei in Fig. 6 die Unter- oder Rückseite der Wand 44 mit der Ausnehmung 64 zu erkennen ist, die über die Vorderkante 34 auskragt. In Fig. 6 ist rechts neben dem Regalfach 35 die aufgeschnittene Rinne 64 des Regalbediengerätes zu erkennen und zwar in einem Blick auf die Oberoder Außenseite des Schenkels 63, dessen untere Kante ist eine Begrenzungskante des Spaltes 65 ist. Unterhalb des Schenkels 63 ist spiegelbildlich die Ausgangswelle 73 des umgeklappt gezeichneten Getriebemotors 72 zu erkennen mit dem drehfest darauf angeordneten Betätigungsfinger 74. Die Einrichtungen zum Längsverschieben des Getriebemotors 72 und damit des Betätigungsfingers 74 sowie die Führungseinrichtungen hierzu sind aus Gründen der Übersichtlichkeit weggelassen.

Schließlich ist oberhalb des Schenkels 63 jeweils an den Enden ein Haltefinger 93 zu sehen.

In dem gezeigten Regallager sind die Produkte 48 in chaotischer Weise abgelegt. Beim Einlagern erhält die zentrale Steuerung Informationen über die Kantelängen der Produkte 48, den Produktnamen bzw. die Artikelbezeichnung, die Adresse bzw. Lage des jeweiligen Regalfaches und die Position des Produktes auf dem Produktträger 42 und die Schräglage.

Als Ausgangslage für die Erläuterung der Funktion sei angenommen, dass der Produktträger 42 in seinem Regalfach 35 liegt, wobei er bis gegen den Querbalken 31 geschoben ist. Die eine Ausnehmung 46, die von dem Querbalken 31 entfernt liegt, ist frei zugänglich.

Auf dem Produktträger 42 liegen insgesamt drei Produkte 48a, 48b, und 84c, die sich in den Abmessungen der Verpackung unterscheiden. Alle Produkte 48 liegen in der gleich Weise schräg gekippt in dem Produktträger 42, wie es am Besten Fig. 3 erkennen läßt.

Wenn beispielsweise das Produkt 48c aus dem gezeigten Regalfach 35 entnommen werden soll, wird von der zentralen Steuerung das Regalbediengerät 4 vor das jeweilige Regalfach 35 bewegt. Dazu wird die Traverse 49 mit dem Regalbediengerät 4 auf die entsprechende Höhe gebracht und sodann wird das Regalbediengerät 4 längs der Traverse 49 auf das betreffende Regalfach 35 ausgerichtet. Ausgerichtet bedeutet in diesem Falle, dass die Rinne 64 des Regalbediengerätes 4 mit der das Regalfach 35 definierenden Rinne hinsichtlich der horizontal Richtung fluchtet, in vertikaler Richtung jedoch ein klein wenig tiefer steht. In dieser Stellung gibt es einen geringen Spalt zwischen der frei zugänglichen Stirnkante des Produktträgers 42 und dem gegenüberstehenden Ende der Rinne 64.

Die zentrale Steuerung, die zuvor in bekannter Weise die Position des Betätigungsfingers 74 normiert hat, und zwar hinsichtlich seiner Drehwinkelstellung als auch hinsichtlich seiner Stellung in Längsrichtung bezogen auf den Spalt 65, veranlasst nun, dass der Getriebemotor 81 den Getriebemotor 82 mit dem Betätigungsfinger 74 in Richtung auf den Produktträger 42 bewegt. Die Bewegung wird angehalten, sobald beispielsweise der in dieser Zeichnung nach oben zeigende Haken 77 sich unterhalb der Ausnehmung 46 befindet. Um den Betätigungsfinger 74 in diese Stellung zu bringen, wurde er zuvor in eine horizontale Lage geschwenkt in der keiner der Haken 77 und 78 in den Spalt 56 eintaucht. Damit kann der Betätigungsfinger 74 ungehindert bis unter den Produktträger 42 gebracht werden.

Sobald er sich in der richtigen Stellung befindet, veranlasst die Steuerung, dass der Betätigungsfinger 74 ausgehend von der Horizontallage in eine erste nach oben geschwenkte Stellung gedreht wird, in der der jeweils nach oben zeigend Haken 77 oder 78 in die Ausnehmung 46 eingreift ohne den Produktträger 42 anzuheben. Ersichtlicherweise wirken die Haken 77 und 78 zusammen mit den Ausnehmungen 46 als Koppelmittel, um nunmehr das Regalbediengerät 4 mit dem betreffenden Produktträger 42 zu koppeln. Es ist damit die Stellung nach Fig. 6 erreicht.

Falls noch nicht geschehen, werden die Haltefinger 93 nach oben aus der Rinne 64 heraus geklappt.

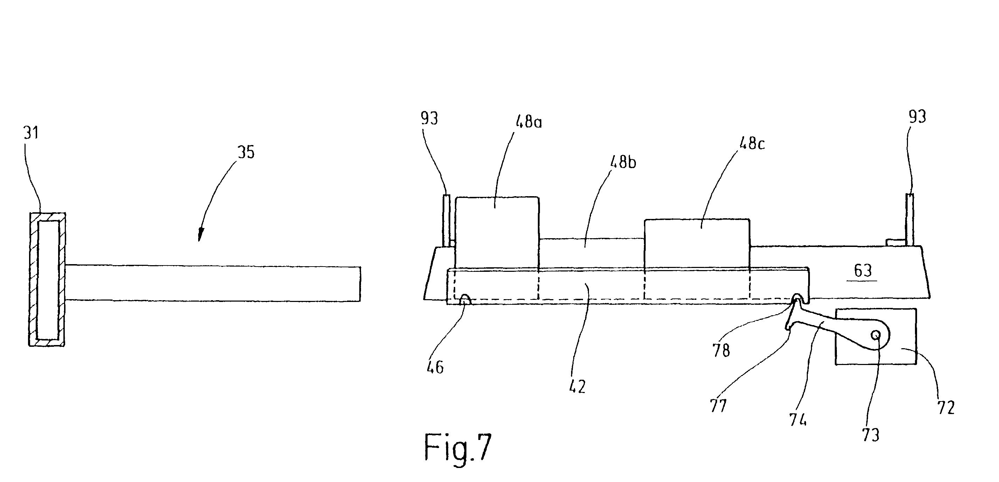

Die Steuerung veranlasst nun den Getriebemotor 81 sich wiederum in Gang zu setzen, und zwar in der entgegengesetzten Richtung, wodurch der Betätigungsfinger 74 den mit ihm verhakten Produktträger 42 vollständig auf die Rinne 74 zieht, so weit, bis die Hinterkante des Produktträgers 42, die in Fig. 6 an dem Querbalken 41 angestoßen ist, hinter den Lichtraum des linken Haltefingers 93 zurückgezogen ist. Diese Endelage ist in Fig. 7 zu sehen.

Nunmehr veranlasst die zentrale Steuerung, den Haltefinger 93 mit Hilfe des Getriebemotors 86 in die Rinne 64 zu schwenken.

Sobald die Haltefinger 93 herunter geschwenkt sind, setzt die zentrale Steuerung den Servomotor 81 erneut in Gang, in Richtung auf das Regalfach 35 aus dem soeben der Produktträger herausgezogen wurde. Vorher wurde allerdings die Höhe der Traverse 49 geringfügig verändert, damit beim Zurückschieben des Produktträgers 42 in das Regalfach 35 dessen rückwärtige Kante nicht mit der Vorderkante 35 kollidiert. Wenn jetzt der Produktträger 42 mit Hilfe des Servomotors 81 zurück in sein Regalfach 35 geschoben wird, können die auf dem Produktträger 42 liegenden Produkte 48a, 48b und 48c der Bewegung nicht folgen, weil das Produkt 48a an dem Haltefinger 93 anstößt. Durch die Längsbewegung des Betätigungsfingers 74 in Richtung auf das Regalfach 35 werden die Produkte 48 auf dem Produktträger 42 in Richtung auf den Betätigungsfinger 74 verschoben. Während der Bewegung wird als erstes das Produkt 48c, das dem Betätigungsfinger 74 am nächsten benachbart ist, von dem Produktträger 42 herunter in die Rinne 64 des Regalbediengerätes 4 fallen.

Da beim Einlagern der Produkte die zentrale Steuerung zu jedem Produkt vermerkt hat, welche Kantenabmessungen der Gegenstand hat, in welchem Regalfach 35 er sich befindet und auf welcher Stelle auf dem Produktträger 42, weiß die zentrale Steuerung, wann der Produktträger 42 weit genug verschoben ist, damit unter Hinzurechnung einer gewissen Toleranzstrecke das Produkt 48c mit Sicherheit vom dem Produktträger 42 herunter geschoben ist und in der Rinne 64 liegt.

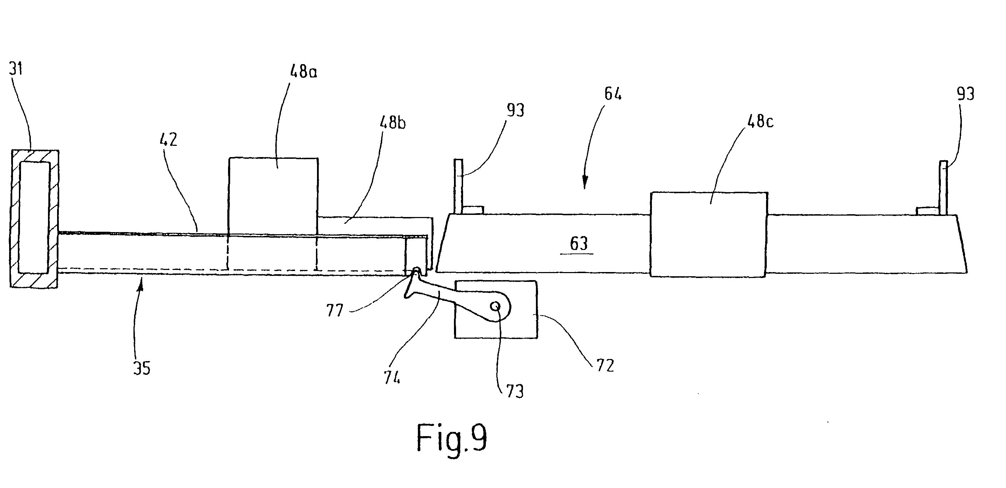

Es wird jetzt kurzzeitig der Vorschub für den Betätigungsfinger 74 unterbrochen, um in der kurzen Pause den Haltefinger 93 nach oben zu schwenken. Das Lichtraumprofil des Produktes 48a ist jetzt wieder frei und es kann der Produktträger 42 zusammen mit den jetzt noch verbliebenen beiden Produkten 48a und 48b zurück in sein Regalfach 35 geschoben werden. Die Endstellung dieser Bewegung ist in Fig. 9 gezeigt. In dem Regalfach 35 liegt jetzt wieder der zugehörige Produktträger 42, der jetzt jedoch nur noch die beiden Produkte 48a und 48b trägt, während das Produkt 48c auf dem Regalbediengerät 4 liegen geblieben ist.

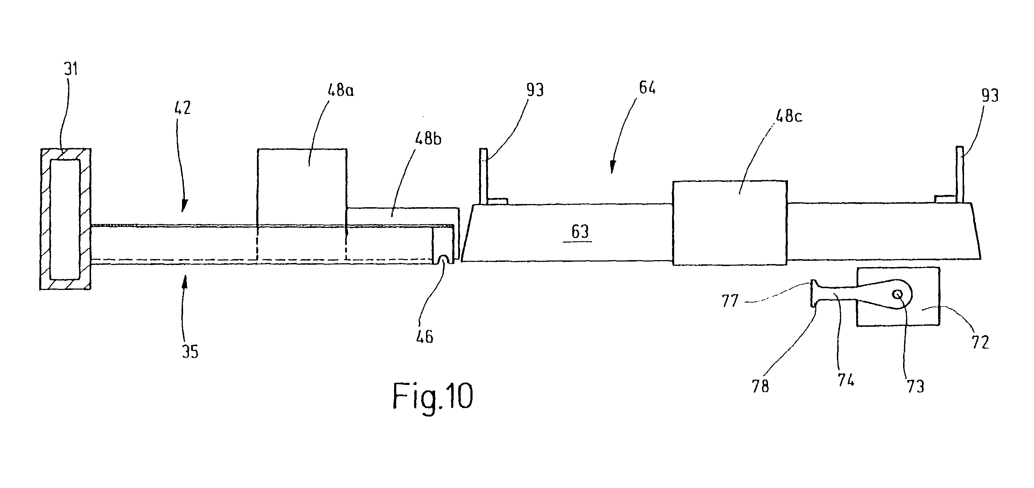

Die zentrale Steuerung veranlasst den Servomotor 72 den Betätigungsfinger 74 nach unten zu schwenken, damit er außer Eingriff mit dem Produktträger 42 kommt. Sodann wird mit Hilfe des Servomotors 81 der Betätigungsfinger 74 zusammen mit seinem Servomotor 72 in die rechte Endlage gemäß Fig. 10 gebracht, wobei er unter dem Regalbediengerät 4 liegenden Produkt 48c vorbei läuft. Angekommen in dieser Stellung oder während der Betätigungsfinger 74 in diese Stellung läuft, wird das Regalbediengerät 4 von der Steuerung zu einer Ausgaberutsche 94 gebracht, deren Seitenwand in Fig. 1 zu sehen sind. Diese Ausgaberutsche 94 schließt sich an dem Ende einer der Regalbodenplatten 32 an und stellt dort eine nach außen führende Verlängerung der letzten nach unten führenden Seitenwand 37 dar.

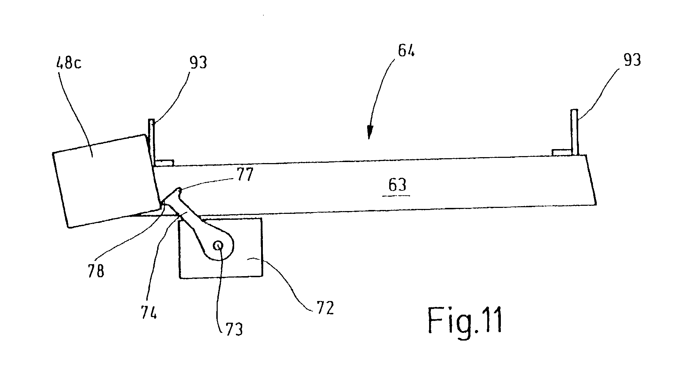

Wenn das Regalbediengerät 4 diesen Koordinatenpunkt erreicht, wird hinter dem Produkt 48c der Betätigungsfinger 4 mit Hilfe des Servomotors 42 nach oben geschwenkt und zwar weiter als zum Koppeln mit dem mit dem Produktträger 42 erforderlich ist. Die Schwenkstellung zum Koppeln der Ausnehmung 46 des Produktträgers 42 nicht hoch genug und der Betätigungsfinger 74 würde wirkungslos unter dem Produkt 48c vorbeilaufen. Da jedoch beabsichtigt ist das Produkt 48c vom dem Regalbediengerät 4 herunter zu schaffen, wird der Betätigungsfinger 74 deutlich in das Lichtraumprofil der Rinne 64 hineinragen aufgerichtet, um mit dem Produkt 48c zusammen treffen zu können. Durch den weiteren Vorschub nach links wird wie Fig. 11 zeigt das Produkt 48c aus der Rinne 64 heraus gestoßen, um über die Ausgaberutsche 94 auf ein nicht weiter gezeigtes weiteres Transportsystem übergeben zu werden.

Die Funktionsweise der gesamten Anordnung wurde in den Fig. 6 bis 11 so veranschaulicht, als würde ein Produktträger 42 aus dem linken Ziehgestell 17a gehandhabt. In sinngemäß der gleichen Weise nur spiegelbildlich kann ein Produktträger 42 aus dem rechten Ziehgestell 17b bewegt und bearbeitet werden. Dazu wird der Betätigungsfinger 74 in die spiegelbildliche Lage zu den Stellungen gebracht wie sie in den Fig. 6 bis 11 gezeigt sind. Da jeder Produktträger 42 in der Nähe beider Enden mit den Ausnehmungen 46 versehen ist, ist ohne weiteres die Kopplung mit den Produktträgern 42 in dem rechten Ziehgestell 17b zu bewerkstelligen, ohne den Betätigungsfinger 74 in Richtung parallel zu der Ausgangswelle 73 versetzen zu müssen. Er befindet sich in dem Spalt 65 immer in der gleichen Lage wie dies Fig. 4 recht gut erkennen läßt.

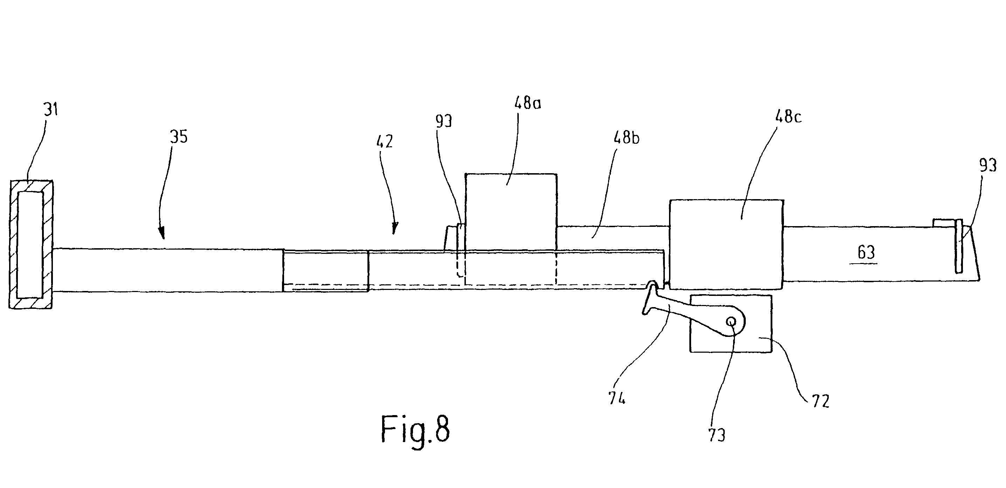

Vorstehend wurde erläutert, wie das Produkt 48c zu der Ausgaberutsche 94 geschafft werden kann. Wenn an Stelle des Produktes 48c das Produkt 48a benötig wird, bleibt abweichend von der Darstellung nach Fig. 8 der Haltefinger 93 abgesenkt, solange bis auch das Produkt 48a lose in der Rinne 64 des Regalbediengerätes liegt. Sodann kehrt der Betätigungsfinger 74 in die Stellung nach Fig. 10 zurück, das Regalbediengerät 4 fährt vor die Ausgaberutsche 94 und sobald dieser Ort erreicht ist, wird, ähnlich wie in Fig. 11 dargestellt, mit Hilfe des Betätigungsfingers 74 die hintereinander liegende Gruppe aus den drei Produkten 48a, 48b und 48c solange nach vorne geschoben, bis das Produkt 48a von der Rinne 64 des Regalbediengerätes 4 auf die Ausgaberutsche 94 herunterstürzt.

Nachdem dies eingetreten ist, wird der Vorschub des Betätigungsfingers 74 angehalten. Aufgrund der Abmessungen der Produkte 48a, 48b und 48c und ihrer Lage auf der Rinne 64 zufolge der Arretierung durch die Haltefinger 93, weiß die Steuerung, in welcher Stellung des Betätigungsfingers 74 das Produkt 48a die Rinne 64 verlassen hat.

Das Regalbediengerät 4 kehrt jetzt zu dem Regalfach 35 zurück, in dem der Produktträger 42 liegt, von dem die Produkte zuvor 48a, 48b und 48c entnommen wurden. Das Regalbediengerät wird in eine Stellung gebracht, in der die Rinne 64 etwas höher steht als die von dem Produktträger 42 definierte Rinne 47 und sodann wird die zunächst angehaltene Vorschubbewegung des Betätigungsfingers 74 fortgesetzt. Die noch auf dem Bediengerät verblieben Produkte 48b und 48c werden auf den freien Produktträger 42 zurückgeschoben bis sich das Produkt 48c wieder in der Stellung befindet die Fig. 6 zeigt.

In sinngemäß ähnlicher Weise kann mit dem mittleren Produkt 48b verfahren werden, wenn es ausgelagert werden soll. In diesem Fall würde der Produktträger 42, nachdem er in das zugehörige Regalfach 35 zurückgeschafft wurde, zunächst nur noch das Produkt 48a tragen, und es würde nach der Ausgabe des Produktes 48b das noch in der Rinne 64 verblieben Produkt 48c auf den Produktträger 42 zurückgebracht werden.

Ein Regallager 1 enthält Regalfächer 35, die als Boden 41 eine V-förmige Rinne aufweisen. In jeder Rinne 34 liegt ein Produktträger 42, der ebenfalls die Gestalt einer V-förmigen Rinne hat. Das Regalbediengerät 4, mit dem die Produkte 48 ein- und ausgelagert werden, trägt seinerseits auf der Oberseite eine V-förmige Rinne 64, auf der entweder der Produktträger 42 mit den Produkten 48 oder ein auszugebendes Produkt 48 alleine abgelegt werden können. Mit Hilfe eines Betätigungsfingers 74, der durch einen Spalt 65 in der Rinne 64 des Bediengerätes 4 nach oben geschwenkt werden kann, läßt sich der Produktträger 42 zwischen dem Regalfach 35 und dem Regalbediengerät 4 hin und her verschieben bzw. die ohne Produktträger 42 lose auf dem Regalbediengerät 4 liegende Verpackung 48.

## Patentansprüche

1. Regallager (1) mit
- einer Anzahl von Regalfächern (35), von denen jedes einen Fachboden (41) mit
einer Oberseite aufweist, die regalfeste Führungsmittel (36, 37) vorsieht, von denen sich
je eines in einem Regalfach (35) befindet und als eine sich in Längsrichtung des Fachbodens erstreckende Führungsrinne ausgebildet ist,
- einer Anzahl von Produktträgern (42), von denen je einer einem Regalfach (35)
zugeordnet ist, der über produktträgerfeste Führungsmittel (43,44), die untereinander gleich und zu den regalfesten Führungsmitteln (36,37) komplementär sind, und über eine Auflagefläche für zu lagernde Produkte (48) aufweist, und
- einem Regalbediengerät (4), das dazu eingerichtet ist, vor jedes der Regalfächer (35) positioniert zu werden,
**dadurch gekennzeichnet, dass**
- der Produktträger (42) längs relativ zur Führungsrinne des jeweiligen Fachbodens verschiebbar gelagert ist,
- der Produktträger (42) eine sich in Längsrichtung erstreckende, nach oben offene Aufnahmerinne (47), deren wenigstens eine Stirnseite offen ausgebildet ist, aufweist, und
- das Regalbediengerät einen Betätigungsfinger (74), der in Eingriff mit dem Produktträger (42) bringbar und in Längsrichtung verschiebbar ist, sowie wenigstens einen Haltefinger (93a, 93b) vorsieht, der in den Lichtraum der nach oben offenen Aufnahmerinne schwenkbar ist, damit die auf dem Produktträger (42) liegenden Produkte (48) der Bewegung des Produktträgers nicht folgen, weil die Produkte an dem wenigstens einen Haltefinger anstoßen.

2. Regallager nach Anspruch 1, **dadurch gekennzeichnet, dass** die Regalfächer (35) in Gruppen angeordnet sind und die Fachböden (41) einer Gruppe miteinander verbunden sind.

3. Regallager nach Anspruch 1
**dadurch gekennzeichnet, dass** die Regalfächer (35) in Gruppen angeordnet sind und die Fachböden (41) einer Gruppe einstückig miteinander verbunden sind.

4. Regallager nach Anspruch 1,
**dadurch gekennzeichnet, dass** die Regalfächer (35) in Gruppen angeordnet sind und die Fachböden (41) einer Gruppe in einer horizontalen Ebene liegen.

5. Regallager nach Anspruch 1,
**dadurch gekennzeichnet, dass** alle Regalfächer (35) dieselbe Tiefe aufweisen, gemessen in Richtung senkrecht zu eine Ebene, in der sich das Regalbediengerät (4) beim Positionieren von einem Regalfach (35) auf ein anderes Regalfach (35) bewegt.

6. Regallager nach Anspruch 1,
**dadurch gekennzeichnet, dass** die Regalfächer (35) gruppenweise unterschiedliche Breite aufweisen.

7. Regallager nach Anspruch 1,
**dadurch gekennzeichnet, dass** ein jeweiliges Regalfach (35) zu den seitlich jeweils benachbarten Regalfächern (35) offen ist.

8. Regallager nach Anspruch 1,
**dadurch gekennzeichnet, dass** das regalfeste Führungsmittel (36,37) durch die Geometrie des jeweiligen Fachbodens (41) gebildet ist.

9. Regallager nach Anspruch 1,
**dadurch gekennzeichnet, dass** die Führungsrinne nach oben offen ausgebildet ist.

10. Regallager nach Anspruch 1,
**dadurch gekennzeichnet, dass** der Fachboden (41) zwei ebene Flächen (36,37) aufweist, die zueinander V-förmig verlaufen und die über die Tiefe des jeweiligen Regalfachs (35) mit dieser relativen Zuordnung durchlaufen.

11. Regallager nach Anspruch 1,
**dadurch gekennzeichnet, dass** der Fachboden (41) eines jeweiligen Regalfachs (35) lediglich von den beiden V-förmig zueinander verlaufenden Flächen (36,37) gebildet ist.

12. Regallager nach Anspruch 11,
**dadurch gekennzeichnet, dass** die V-förmig zueinander verlaufenden Flächen (36, 37) miteinander einstückig sind.

13. Regallager nach Anspruch 11,
**dadurch gekennzeichnet, dass** die V-förmig zueinander verlaufenden Flächen (36, 37) einen Winkel von 90° miteinander einschließen.

14. Regallager nach Anspruch 1,
**dadurch gekennzeichnet, dass** die Regalfächer (35) in Gruppen angeordnet sind und die Fachböden (41) einer Gruppe von einer gewellten Platte (32) gebildet sind.

15. Regallager nach Anspruch 14,
**dadurch gekennzeichnet, dass** die Platte (32) an einer von dem Regalbediengerät (4) abliegenden Kante (33) mit einem an einem Regalgestell (2,17) befestigten Balken (31) verbunden ist.

16. Regallager nach Anspruch 15,
**dadurch gekennzeichnet, dass** der Balken (31) in dem Regalgestell (2,17) höhenverstellbar befestigt ist.

17. Regallager nach Anspruch 1,
**dadurch gekennzeichnet, dass** mehrere Regalfächer (35) in einem Gestell (17) angeordnet sind und dass das Gestell (17) in dem Regalgestell (2) beweglich gelagert ist.

18. Regallager nach Anspruch 1,
**dadurch gekennzeichnet, dass** sich zwei Regalgestelle (2,17) mit Abstand gegenüber befinden und dass zwischen den Regalgestellen (2,17) das Regalbediengerät (4) vorgesehen ist.

19. Regallager nach Anspruch 1,
**dadurch gekennzeichnet, dass** die Produktträger (42) derart gestaltet sind, dass sie mit ihrer Unterseite unmittelbar auf dem jeweiligen Fachboden (41) aufliegen.

20. Regallager nach Anspruch 1,
**dadurch gekennzeichnet, dass** die Unterseite des Produktträgers (42) an die Oberseite des zugehörigen Fachbodens (41) angepasst ist.

21. Regallager nach Anspruch 1,
**dadurch gekennzeichnet, dass** der Produktträger (42) an seiner Oberseite Positioniermittel (47) aufweist, um auf dem Produktträger (42) befindliche Produkte (48) auszurichten und/oder ausgerichtet zu halten.

22. Regallager nach Anspruch 1,
**dadurch gekennzeichnet, dass** der Produktträger (42) zwei ebene Flächen (43, 44) aufweist, die zueinander V-förmig verlaufen und die über die Länge des jeweiligen Produktträgers (42) mit dieser relativen Zuordnung durchlaufen.

23. Regallager nach Anspruch 1,
**dadurch gekennzeichnet, dass** der Produktträger (42) eines jeweiligen Regalfachs (35) lediglich von den beiden V-förmig zueinander verlaufenden Flächen (43,44) gebildet ist.

24. Regallager nach Anspruch 23,
**dadurch gekennzeichnet, dass** die V-förmig zueinander verlaufenden Flächen (43, 44) miteinander einstückig sind.

25. Regallager nach Anspruch 23,
**dadurch gekennzeichnet, dass** die V-förmig zueinander verlaufenden Flächen (43, 44) einen Winkel von 90° miteinander einschließen.

26. Regallager nach Anspruch 1,
**dadurch gekennzeichnet, dass** die Länge des Produktträgers (42) größer ist als die Tiefe des zugehörigen Regalfachs (35).

27. Regallager nach Anspruch 1,
**dadurch gekennzeichnet, dass** sämtliche Produktträger (42) dieselbe Länge aufweisen, unabhängig von der Breite des jeweiligen Regalfachs.

28. Regallager nach Anspruch 1,
**dadurch gekennzeichnet, dass** die Länge eines Produktträgers (42) größer ist als die Summe von wenigstens zwei, vorzugsweise drei, mittelgroßen Produkten (48), wobei die Abmessungen des mittelgroßen Produktes (48) aus dem Mittelwert der Abmessungen aller Produkte (48) näherungsweise berechnet ist.

29. Regallager nach Anspruch 28,
**dadurch gekennzeichnet, dass** Produkte (48) mit gleichen Abmessungen lediglich einmal bei der Berechnung des Mittelwertes berücksichtigt werden.

## Claims

1. A shelf storage system (1) having
- a multiplicity of shelf compartments (35), of which each is provided with a compartment floor (41) having
an upper side which is provided with shelf-fixed guiding means (36, 37) one of which
is located in one said shelf compartment (35) and is designed as a guide channel extending in the longitudinal direction of said compartment floor,
- a multiplicity of product carriers (42), one of which is allocated to each said shelf compartment (35), said product carrier (42) is provided with product-carrier-fixed guiding means (43,44), which are identical and complementary to said shelf-fixed guiding means (36,37), and with a support surface for to-be-stored products (48), and
- a storage and retrieval unit (4), which is designed to be positioned before each said shelf compartment (35),
**wherein**
- said product carrier (42) is borne moveable in longitudinal direction relative to the guide channel of the respective compartment floor,
- said product carrier (42) is provided with a reception channel (47) extending in longitudinal direction and open to the top, at least one of whose front ends is designed open, and
- said storage and retrieval unit (4) is provided with an actuating finger (74), which can be brought to engage with said product carrier (42) and is moveable in longitudinal direction, and with at least one retaining finger (93a,93b), which can be swung into the obstruction limit of said open-to-the-top reception channel in such a manner that said products (48) lying on said product carrier (42) do not follow the movement of said product carrier, because said products touch at least one said retaining finger.

2. A shelf storage system according to claim 1,
wherein said shelf compartments (35) are arranged in groups and said compartment floors (41) of a group are connected to each other.

3. A shelf storage system according to claim 1,
wherein said shelf compartments (35) are arranged in groups and said compartment floors (41) of a group are connected to each other in one piece.

4. A shelf storage system according to claim 1,
wherein said shelf compartments (35) are arranged in groups and said compartment floors (41) of a group lie in a horizontal plane.

5. A shelf storage system according to claim 1,
wherein all said shelf compartments (35) have the same depth measured perpendicular to a plane in which said storage and retrieval unit (4) moves when positioning from one said shelf compartment (35) to another said shelf compartment.

6. A shelf storage system according to claim 1,
wherein said shelf compartments (35) have varying widths groupwise.

7. A shelf storage system according to claim 1,
wherein a respective shelf compartment (35) is open to the laterally adjacent shelf compartments (35).

8. A shelf storage system according to claim 1,
wherein said shelf-fixed guiding means (36,37) are designed by the geometry of the respective compartment floor (41).

9. A shelf storage system according to claim 1,
wherein the guide channel is designed open at the top.

10. A shelf shelf storage system according to claim 1,
wherein said compartment floor (41) has two plane surfaces (36, 37) which run V-shaped toward each other running the depth of said respective shelf compartment (35) in this relative arrangement.

11. A shelf storage system according to claim 1,
wherein said compartment floor (41) of each said shelf compartment (35) is formed solely by said two surfaces (36,37) running V-shaped toward each other.

12. A shelf storage system according to claim 11,
wherein said surfaces (36,37) running V-shaped toward each other are one-piece.

13. A shelf storage system according to claim 11,
wherein said surfaces (36, 37) running V-shaped toward each other form a 90° angle.

14. A shelf storage system according to claim 1,
wherein said shelf compartments (35) are arranged in groups and said compartment floors (41) of a group are formed by a wavy plate (32).

15. A shelf storage system according to claim 14,
wherein said plate (32) is connected with an edge (33) lying at a distance from said storage and retrieval unit (4) to a beam (31) attached to a shelf rack (2, 17).

16. A shelf storage system according to claim 15,
wherein said beam (31) is attached in said shelf rack (2, 17) in a height-adjustable manner.

17. A shelf storage system according to claim 1,
wherein a multiplicity of said shelf compartments (35) are arranged in a rack (17) and said rack (17) is borne in a moveable manner in said shelf rack (2).

18. A shelf storage system according to claim 1,
wherein two said shelf racks (2, 17) are located facing each other spaced apart and said storage and retrieval unit (4) is provided between said shelf racks (2, 17).

19. A shelf storage system according to claim 1,
wherein said product carriers (42) are designed in such a manner that they rest with their underside directly on said respective compartment floor (41).

20. A shelf storage system according to claim 1,
wherein the underside of said product carrier (42) is adapted to the upper side of said respective compartment floor (41).

21. A shelf storage system according to claim 1,
wherein said product carrier (42) is provided on the upper side thereof with positioning means (47) to align and/or hold said products (48) located on said product carrier (42) aligned.

22. A shelf storage system according to claim 1,
wherein said product carrier (42) has two plane surfaces (43, 44) which run V-shaped toward each other running the length of said respective product carrier (42) in this relative arrangement.

23. A shelf storage system according to claim 1,
wherein said product carrier (42) of a respective said shelf compartment (35) is formed solely by said two surfaces (43, 44) running V-shaped toward each other.

24. A shelf storage system according to claim 23,
wherein said surfaces (43,44) running V-shaped toward each other are one piece.

25. A shelf storage system according to claim 23,
wherein said surfaces (43,44) running V-shaped toward each other form a 90° angle.

26. A shelf storage system according to claim 1,
wherein the length of said product carrier (42) is greater than the depth of said respective shelf compartment (35).

27. A shelf storage system according to claim 1,
wherein all said product carriers (42) are of the same length independent of the width of said respective shelf compartment.

28. A shelf storage compartment according to claim 1,
wherein the length of a product carrier (42) is greater than the sum of at least two, preferably three, medium-sized products (48), with the dimensions of said medium-sized product (48) being calculated by approximation from the average value of the dimensions of all said products (48).

29. A shelf system according to claim 28,
wherein said products (48) with the same dimensions are only taken into account once in calculating the average value.

## Revendications

1. Rayonnages (1) avec
- une multitude de compartiments d'étagère (35) dont chacun présente un fond de compartiment (41) avec un côté supérieur , lequel côté prévoit des moyens de guidage fixés à l'étagère (36, 67) dont un se trouve à chaque fois dans un compartiment d'étagère (35) et qui est réalisé en tant que roulotte de guidage s'étendant en direction longitudinale du fond de compartiment ,
- une multitude de supports de produit (42) dont à chaque fois un support est associé à un compartiment d'étagère (35) , lequel support présente des moyens de guidage (43, 44) fixés aux supports de produit , lesquels moyens sont identiques entre eux et complémentaires aux moyens de guidage (36, 37) fixés à l'étagère, et présente une surface d'appui pour les produits (48) à stocker, et
- un appareil de chargement d'étagères (4) étant équipé pour être positionné devant chacun des compartiments d'étagère (35),
**caractérisé en ce que**
- le support de produit (42) est logé afin de pouvoir coulisser de façon longitudinale par rapport à la goulotte de guidage du fond de compartiment respectif,
- le support de produit (42) présente une goulotte de réception (47) ouverte vers le haut et s'étendant en direction longitudinale, un côté frontal au moins de ladite goulotte étant formé de façon ouverte, et
- l'appareil de chargement d'étagère prévoit un doigt d'actionnement (74) qui peut être engrené avec le support de produit (42) et qui peut être déplacé en direction longitudinale , et que ledit appareil prévoit également au moins un doigt d'arrêt (93a, 93b) qui peut être pivoté dans la zone morte de la goulotte de réception ouverte vers le haut, afin que les produits (48) posés sur le support de produit (42) ne suivent pas le mouvement du support de produit du fait que les produits butent contre au moins un doigt d'arrêt.

2. Rayonnages selon la revendication 1, **caractérisés en ce que** les compartiments d'étagère (35) sont disposés en groupes et que les fonds de compartiment (41) d'un groupe sont liés entre eux.

3. Rayonnages selon la revendication 1, **caractérisés en ce que** les compartiments d'étagère (35) sont disposés en groupes et que les fonds de compartiment (41) d'un groupe sont liés entre eux de façon solidaire.

4. Rayonnages selon la revendication 1, **caractérisés en ce que** les compartiments d'étagère (35) sont disposés en groupes et que les fonds de compartiment (41) d'un groupe sont situés dans un plan horizontal.

5. Rayonnages selon la revendication 1, **caractérisés en ce que** tous les compartiments d'étagère (35) présentent la même profondeur, mesurée dans une direction perpendiculaire par rapport à un plan dans lequel se déplace l'appareil de chargement d'étagère (4) lors du positionnement à partir d'un compartiment d'étagère (35) vers un autre compartiment d'étagère (35).

6. Rayonnages selon la revendication 1, **caractérisés en ce que** les compartiments d'étagère (35) présentent des largeurs différentes par groupe.

7. Rayonnages selon la revendication 1, **caractérisés en ce qu'** un compartiment d'étagère respectif (35) est ouvert vers les compartiments d'étagères (35) ouverts à chaque fois de façon latérale.

8. Rayonnages selon la revendication 1, **caractérisés en ce que** le moyen de guidage (36, 37) fixé à l'étagère est formé grâce à la géométrie du fond de compartiment respectif (41).

9. Rayonnages selon la revendication 1, **caractérisés en ce que** la goulotte de guidage est réalisée de façon ouverte vers le haut.

10. Rayonnages selon la revendication 1, **caractérisés en ce que** le fond de compartiment (41) comporte deux surfaces planes (36, 37) qui s'étendent l'une par rapport à l'autre sous la forme d'un V et traversent la profondeur du fonds de compartiment (35) respectif avec cette association.

11. Rayonnages selon la revendication 1, **caractérisés en ce que** le fond de compartiment (41) d'un compartiment d'étagère respectif (35) est formé par les deux surfaces s'étendant sous la forme d'un V l'une par rapport à l'autre.

12. Rayonnages selon la revendication 1, **caractérisés en ce que** les surfaces (36, 37) s'étendant sous la forme d'un V l'une par rapport à l'autre sont solidaires entre elles.

13. Rayonnages selon la revendication 1, **caractérisés en ce que** les surfaces (36, 37) s'étendant sous la forme d'un V l'une par rapport à l'autre forment un angle de 90° entre elles.

14. Rayonnages selon la revendication 1, **caractérisés en ce que** les compartiments d'étagère (35) sont disposés en groupes et que les fonds de compartiment (41) d'un groupe sont formés par une plaque ondulée (32).

15. Rayonnages selon la revendication 1, **caractérisés en ce que** la plaque (32) est raccordée sur un bord (33) détourné de l'appareil de chargement d'étagère à une poutre (31) fixée sur un échafaud d'étagère (2, 17).

16. Rayonnages selon la revendication 1, **caractérisés en ce que** les poutres (31) dans l'échafaud d'étagère (2, 17) peuvent être réglées en hauteur.

17. Rayonnages selon la revendication 1, **caractérisés en ce que** plusieurs compartiments d'étagère (35) sont disposés dans un échafaud (17) et que l'échafaud (17) est logé de façon à pouvoir être déplacé dans l'échafaud d'étagère (2).

18. Rayonnages selon la revendication 1, **caractérisés en ce que** deux échafauds d'étagère (2, 17) sont situés éloignés l'un en face de l'autre et que l'on a prévu entre les échafauds (2, 17) l'appareil de chargement d'étagère (4).

19. Rayonnages selon la revendication 1, **caractérisés en ce que** les supports de produits (42) sont formés de manière à s'appuyer avec leur côté inférieur directement sur le fond de compartiment respectif (41).

20. Rayonnages selon la revendication 1, **caractérisés en ce que** le côté inférieur du support de produit (42) est adapté au côté supérieur du fond de compartiment associé (41).

21. Rayonnages selon la revendication 1, **caractérisés en ce que** le support de produit (42) comporte sur son côté supérieur des moyens de positionnement (47) pour orienter et / ou pour garder orienté des produits (48) se trouvant sur le support de produit (42).

22. Rayonnages selon la revendication 1, **caractérisés en ce que** le support de produit (42) comporte deux surfaces planes (43, 44) qui s'étendent l'une par rapport à l'autre sous la forme d'un V et traversent la profondeur du fonds de compartiment (35) respectif avec cette association.

23. Rayonnages selon la revendication 1, **caractérisés en ce que** le support de produit (42) d'un compartiment d'étagère respectif (35) est formé uniquement par les deux surfaces (43, 44) s'étendant sous la forme d'un V l'une par rapport à l'autre.

24. Rayonnages selon la revendication 1, **caractérisés en ce que** le les surfaces (43, 44) s'étendant l'une par rapport à l'autre sous la forme d'un V sont solidaires l'une de l'autre.

25. Rayonnages selon la revendication 1, **caractérisés en ce que** les surfaces (43, 44) s'étendant sous la forme d'un V l'une par rapport à l'autre forment un angle de 90° entre elles.

26. Rayonnages selon la revendication 1, **caractérisés en ce que** la longueur du support de produit (42) est plus élevée que la profondeur du compartiment d'étagère associé.

27. Rayonnages selon la revendication 1, **caractérisés en ce que** tous les supports de produit (42) présentent la même longueur , indépendamment de la largeur du compartiment d'étagère respectif.

28. Rayonnages selon la revendication 1, **caractérisés en ce que** la longueur d'un support de produit (42) est plus élevée que la somme d'au moins deux, de préférence trois, produits (48) de tailles moyennes , les dimensions du produit (48) de taille moyenne étant calculées approximativement à partir de la valeur moyenne des dimensions de tous les produits.

29. Rayonnages selon la revendication 1, **caractérisés en ce qu'**on prend qu'une fois en compte les produits (48) de tailles identiques pour le calcul de la valeur moyenne.
